# EUROPÄISCHE PATENTSCHRIFT

(11) **EP 1 765 645 B1**
(45) Veröffentlichungstag und Bekanntmachung des Hinweises auf die Patenterteilung: **24.09.2008**
(21) Anmeldenummer: 05756537.6
(22) Anmeldetag: 09.06.2005
(51) Int. Cl.: B60S 1/08

(54) **VORRICHTUNG ZUM BEFESTIGEN EINES REGENSENSORS AN EINEM TRÄGER**
DEVICE FOR FASTENING A RAIN SENSOR ON A SUPPORT
DISPOSITIF PERMETTANT DE FIXER UN DETECTEUR DE PLUIE A UN SUPPORT

(30) Priorität: 07.07.2004 DE 102004032749
(43) Veröffentlichungstag der Anmeldung: 28.03.2007
(73) Patentinhaber: A. RAYMOND ET CIE, 38000 Grenoble (FR)
(72) Erfinder: HÄNSEL, Mathias, 79595 Rümmingen (DE); PORTELLA RIBERA, Joseph, E-08241 Manresa (ES); CHOUVET, Laurent, 79395 Neuenburg (DE)
(74) Vertreter: Rüttgers, Joachim
(86) Internationale Anmeldenummer: PCT/EP2005/006195
(87) Internationale Veröffentlichungsnummer: WO 2006/005400

(56) Entgegenhaltungen:
- EP-A- 1 040 962
- DE-A1- 10 060 447
- DE-A1- 10 256 835

## Beschreibung

Die Erfindung betrifft eine Vorrichtung zum Befestigen eines Regensensors an einem Träger gemäß dem Oberbegriff des Patentanspruches 1.

Eine derartige Vorrichtung ist aus EP 1 040 962 A2 bekannt. Bei dieser Vorrichtung ist ein Bodenteil ringförmig ausgebildet und umschließt den Regensensor. Ein Deckteil in Gestalt des Fußes eines Rückspiegels ist auf das Bodenteil aufclipsbar.

Aus DE 100 60 447 A1 ist eine Innenspiegelanordnung bekannt, in die eine Sensoranordnung eingebaut ist und die diverse Befestigungsmittel zum Verbinden der Teile der Innenspiegelanordnung und der Sensoranordnung aufweist.

Vorrichtungen zum Befestigen eines Regensensors an einem Träger sind weiterhin in der Praxis bekannt und weisen in der Regel ein einen tellerförmigen Kopfabschnitt eines Regensensors umschließendes Käfigteil auf, das an einer Glasscheibe als Träger angeklebt ist und eine auf den Kopfabschnitt einwirkende Feder trägt, um den Kopfabschnitt gegen die Glasscheibe anzudrücken.

Der Erfindung liegt die Aufgabe zugrunde, eine Vorrichtung der eingangs genannten Art anzugeben, die sich durch eine besonders kleine und damit ästhetisch ansprechende Bauform sowie eine verhältnismäßig hohe Andruckkraft auszeichnet.

Diese Aufgabe wird bei einer Vorrichtung der einganges genannten Art erfindungsgemäß mit den kennzeichnenden Merkmalen des Patentanspruches 1 gelöst.

Dadurch, dass bei der erfindungsgemäßen Vorrichtung der einen Halsabschnitt und einen rundlichen Kopfabschnitt aufweisende Regensensor zwischen einem Bodenteil sowie einem Deckteil eingefügt ist und sein Kopfabschnitt mit den schräg gestellten Randzungen sowie der Halsabschnitt mit Halsstegen gehalten sind, wobei mit der Andruckfederzunge der Kopfabschnitt gegen den Träger anpressbar und die dabei aufgebrachte Kraft über die Randstege des Deckteiles und die Seitenstege des Bodenteils flächig in den Klebstoffauftrag einleitbar ist, lässt sich bei relativ hohen Andruckkräften eine verhältnismäßig schmale Bauform erzielen.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung mit einem zwischen einem Bodenteil und einem Deckteil eingefügten Regensensor,
- Fig. 2: in einer perspektivischen Ansicht das Bodenteil gemäß Fig. 1 mit Blick von unten,
- Fig. 3: in einer perspektivischen Ansicht das Deckteil gemäß Fig. 1,
- Fig. 4: in einem Querschnitt das Ausführungsbeispiel gemäß Fig. 1 bis Fig. 3 und
- Fig. 5: in einem Längsschnitt das Ausführungsbeispiel gemäß Fig. 1 bis Fig. 4.

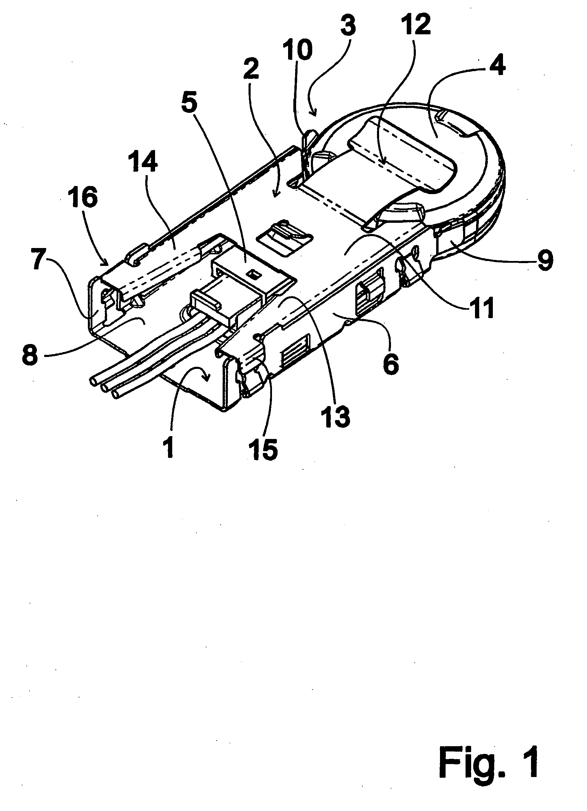

Fig. 1 zeigt in einer perspektivischen Ansicht ein Ausführungsbeispiel einer erfindungsgemäßen Vorrichtung, das ein Bodenteil 1 und ein Deckteil 2 aufweist, die lösbar miteinander verbunden sind. In der Darstellung gemäß Fig. 1 ist zwischen dem Bodenteil 1 und dem Deckteil 2 ein Regensensor 3 eingefügt, der über einen rundlichen Kopfabschnitt 4 und einen an den Kopfabschnitt 4 angesetzten Halsabschnitt 5 verfügt.

Das Bodenteil 1 verfügt bei dem Ausführungsbeispiel gemäß Fig. 1 über zwei parallel zueinander angeordnete Seitenstege 6, 7, die rechtwinklig zu einer Bodenplatte 8 ausgerichtet sind. An einem Ende sind an die Seitenstege 6, 7 Randzungen 9, 10 angesetzt, die winklig zu den Seitenstegen 6, 7 ausgerichtet und unter einem flachen Winkel nach außen ausgestellt sind. Die in Einfügerichtung des Regensensors 3 jeweils einen nach außen abgewinkelten Randbereich aufweisenden Randzungen 9, 10 liegen im erfindungsgemäßen Einsatz der erfindungsgemäßen Vorrichtung an der außenseitigen Umfangsfläche des neben der erfindungsgemäßen Vorrichtung angeordneten Kopfabschnittes 4 des Regensensors 3 an und fixieren ihn dadurch insbesondere gegen seitliche Bewegung.

Das Deckteil 2 ist mit einer Deckplatte 11 ausgebildet, an deren einem Ende eine Andruckfederzunge 12 angeformt ist, die bei bestimmungsgemäßer Anordnung des Regensensors 3 auf dem Kopfabschnitt 4 aufliegt und diesen gegen eine in Fig. 1 nicht dargestellte Glasplatte als Träger drückt. Weiterhin verfügt das Deckteil 2 über im wesentlichen rechtwinklig zu der Deckplatte 11 ausgerichtete, von der Andruckfederzunge 12 wegweisende, mit in Richtung des Bodenteils 1 abgewinkelten Randbereichen ausgebildete Längsabschnitte 13, 14, an deren freien Enden rechtwinklig zu der Deckplatte 11 aufgestellte Umgreifzungen 15, 16 ausgebildet sind, die in zusammengefügter Anordnung des Ausführungsbeispiels die Seitenstege 6, 7 des Bodenteils 1 übergreifen.

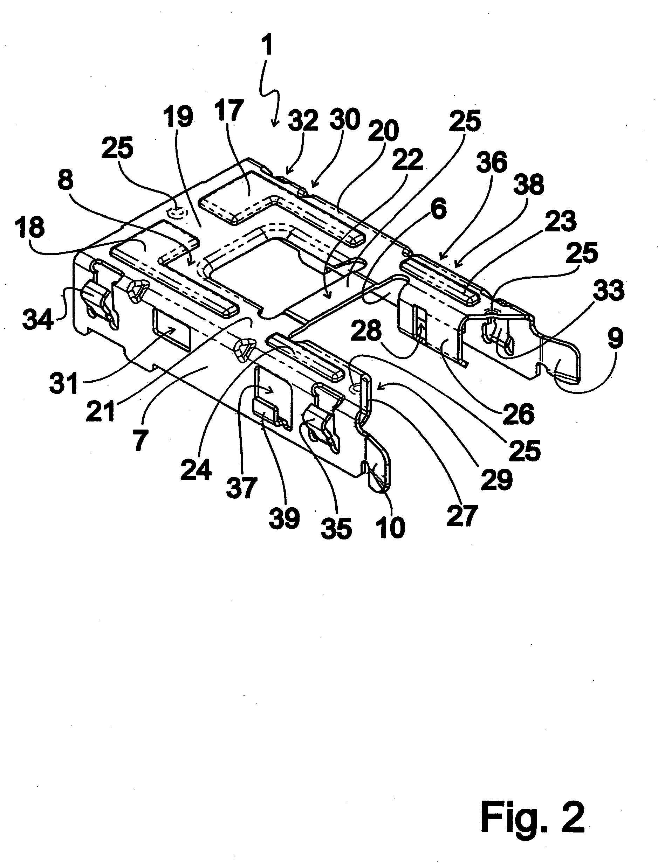

Fig. 2 zeigt in einer perspektivischen Ansicht das Bodenteil 1 gemäß Fig. 1 mit Blick von unten auf zwei L-förmige Klebstoffbereiche 17, 18 eines Klebstoffauftrags, die mit ihrem kurzen breiteren Schenkel in Längsrichtung eines rechtwinklig zu den Seitenstegen 6, 7 ausgerichteten Querabschnittes 19 der Bodenplatte 8 und mit ihren langen schmaleren Schenkeln in Längsrichtung von ebenfalls rechtwinklig zu den Seitenstegen 6, 7 ausgerichteten Längsabschnitten 20, 21 der Bodenplatte 8 liegen. Im Bereich der Enden der langen Schenkel der Klebstoffbereiche 17, 18 ist zwischen den Längsabschnitten 20, 21 ein Mittelsteg 22 ausgebildet. Auf den sich über den Mittelsteg 22 hinaus von dem Querabschnitt 19 wegweisend erstreckenden Endbereichen der Längsabschnitte 20, 21 sind verhältnismäßig schmale längliche Klebstoffbereiche 23, 24 des Klebstoffauftrags vorhanden.

Der Klebstoffauftrag ist mit einem sogenannten Schmelzkleber bewerkstelligt, der bei einer verhältnismäßig niedrigen Temperatur unter Anschmelzen auf das Bodenteil 1 aufgebracht wird und dort anhaftet sowie nach Erwärmen auf eine verhältnismäßig hohe Temperatur unter Aufschmelzen bis zur Verflüssigung das Bodenteil 1 mit einem Träger wie beispielsweise einer Glasplatte verklebt. Um einen gleichbleibenden Abstand des Bodenteils 1 von dem Träger zu gewährleisten, sind in dem Querabschnitt 19, den Längsabschnitten 20, 21 und dem Mittelsteg 22 der Bodenplatte 8 Abstandshalter 25 vorgesehen. Bei dem dargestellten Ausführungsbeispiel sind die Abschlussränder des Querabschnittes 19 und der Längsabschnitte 20, 21 um die Klebstoffbereiche 17, 18, 23, 24 unter anderem zum Erzielen eines kontrollierten Fließverhaltens größtenteils mit abgerundeten Abwinklungen ausgebildet.

In den Endbereichen der Längsabschnitte 20, 21 sind im wesentlichen rechtwinklig zu diesen und damit parallel zu den Seitenstegen 6, 7 Halsstege 26, 27 angesetzt, zwischen denen der Halsabschnitt 5 des Regensensors 3 anzuordnen ist. Die endseitig abgewinkelten Halsstege 26, 27 weisen als Rastmittel in Längsrichtung des Bodenteils 1 zueinander versetzt angeordnete Arretierausnehmungen 28, 29 auf.

Weiterhin ist aus Fig. 2 ersichtlich, dass in den Seitenstegen 6, 7 des Bodenteils 1 Haltedurchbrüche 30, 31 ausgebildet sind, die zum Eingreifen einer Halteeinrichtung beim Anschmelzen des Schmelzklebers in den Klebstoffbereichen 17, 18, 23, 24 dienen. Ebenfalls in den Seitenstegen 6, 7 sind endseitig Arretierzunge 32, 33, 34, 35 einer Rastanordnung ausgebildet, die seitlich nach außen über die Seitenstege 6, 7 überstehen. Schließlich sind an den Seitenstegen 6, 7 Zungenausnehmungen 36, 37 und seitlich überstehende Anschlagszungen 38, 39 ausgebildet, die die Zungenausnehmungen 36, 37 bereichsweise überdecken.

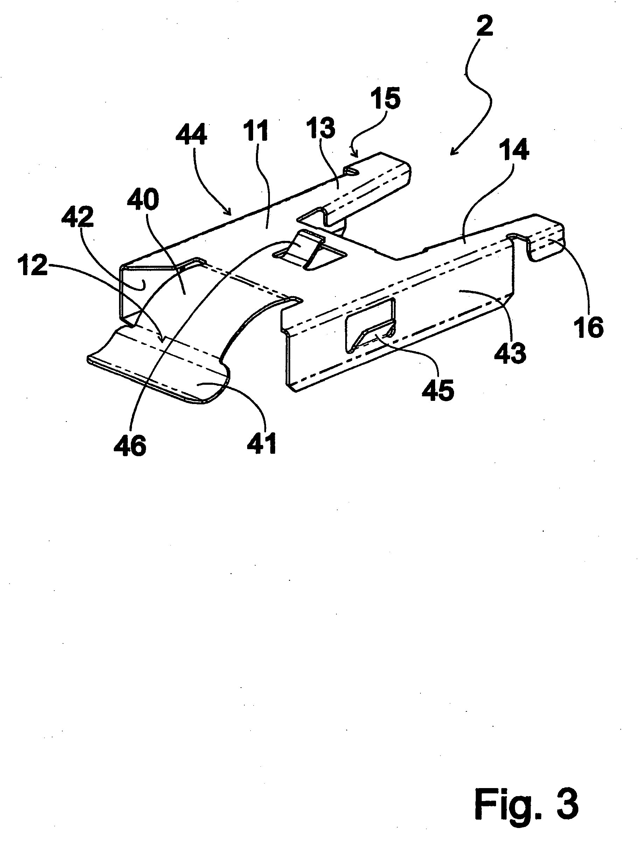

Fig. 3 zeigt in einer perspektivischen Ansicht das Deckteil 2 des Ausführungsbeispieles gemäß Fig. 1. Wie in Fig. 3 besonders gut ersichtlich ist, weist die Andruckfederzunge 12 einen an die Deckplatte 11 angesetzten, von der Deckplatte 11 weg nach innen gebogenen Federabschnitt 40 und einen entgegen der Biegung des Federabschnittes 40 gebogenen Anlageabschnitt 41 auf, der mit seiner von der Deckplatte 11 abgewandten Seite auf dem Kopfabschnitt 4 des Regensensors 3 zum Liegen kommt.

Weiterhin verfügt das Deckteil 2 über rechtwinklig zu der Deckplatte 11 ausgerichtete und im wesentlichen parallel zueinander verlaufende Randstege 42, 43, die sich zwischen der Andruckfederzunge 12 und den Umgreifzungen 15, 16 erstrecken. Die Randstege 42, 43 verfügen über jeweils eine Ausstellzunge 44, 45 die seitlich nach außen über den jeweiligen Randsteg 42, 43 vorstehen. Dabei sind die Ausstellzungen 44, 45 so dimensioniert und positioniert, dass sie in zusammengefügter Anordnung des Bodenteils 1 und des Deckteil 2 in eine in einen Seitensteg 6, 7 des Bodenteils 1 eingebrachte Zungenausnehmung 36, 37 eingreifen und an der zugehörigen Anschlagszunge 38, 39 anliegen. Dadurch ist zusammen mit dem Übergreifen der Umgreifzungen 15, 16 das Deckteil 2 weitestgehend spielfrei und lösbar in dem Bodenteil 1 fixierbar.

Schließlich lässt sich Fig. 3 entnehmen, dass in der Deckplatte 11 eine Gegenfederzunge 46 ausgebildet ist, die von dem Bodenteil 1 wegweisend über die Deckplatte 11 vorsteht.

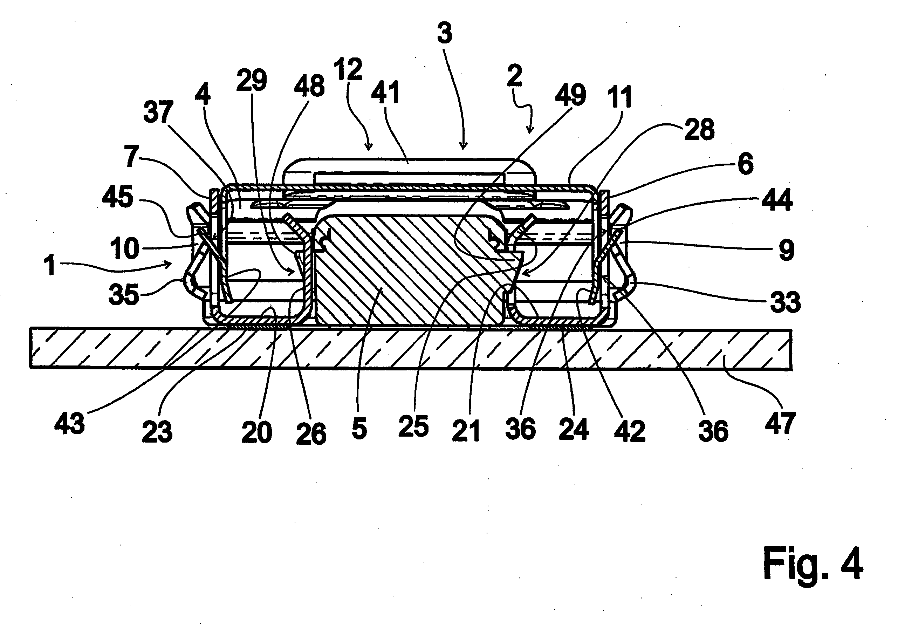

Fig. 4 zeigt in einem Querschnitt das Ausführungsbeispiel einer erfindungsgemäßen Vorrichtung mit zwischengefügtem Regensensor 3 gemäß Fig. 1 bis Fig. 3, das an einer Glasplatte 47 als Träger beispielsweise in Gestalt einer Frontscheibe oder Heckscheibe eines Kraftfahrzeuges angebracht ist. Fig. 4 ist zum einen zu entnehmen, dass an dem Halsabschnitt 5 des Regensensors 3 angesetzte und in Längsrichtung des Halsabschnittes 5 zueinander versetzte Arretiernasen 48, 49 in die Arretierausnehmungen 28, 29 eingreifen und den Regensensor 3 fixieren. Weiterhin ist aus Fig. 4 ersichtlich, dass die Seitenstege 6, 7 des Bodenteils 1 und die Randstege 42, 43 des Deckelteils 2 unter Eingriff der Ausstellzungen 44, 45 in die Zungenausnehmungen 36, 37 sowie dem sich ergebenden, aus Fig. 1 erkennbaren außenseitigen Abstützen der Ausstellzungen 44, 45 an den Anschlagszungen 38, 39 aneinander anliegen und dass dadurch die von der Andruckfederzunge 12 auf den Kopfabschnitt 4 des Regensensors 3 ausgeübte Kraft über die gesamte Randseite in das Bodenteil 1 eingeleitet ist. Dadurch sind die Klebstoffbereiche 17, 18, 23, 24 über ihre gesamte Verbindungsfläche mit der Glasplatte 47 im wesentlichen gleichmäßig belastet, so dass ein von der Randseite beginnendes linienhaftes Lösen vermieden ist.

Insgesamt lässt sich Fig. 4 deutlich entnehmen, dass die Breite der erfindungsgemäßen Vorrichtung im wesentlichen dem Durchmesser des Kopfabschnittes 4 des Regensensors 3 entspricht und damit verhältnismäßig schmal ist.

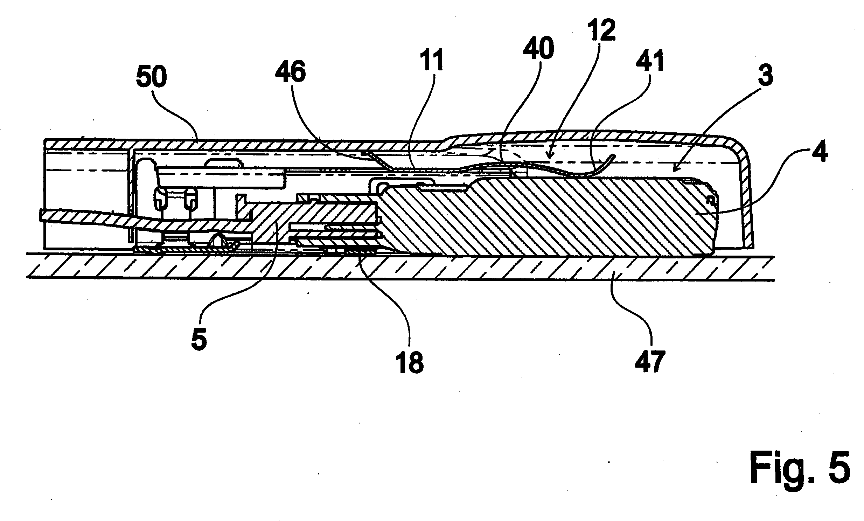

Fig. 5 zeigt in einem Längsschnitt das Ausführungsbeispiel einer erfindungsgemäßen Vorrichtung mit zwischengefügtem Regensensor 3 gemäß Fig. 1 bis Fig. 4, an der unter Eingriff mit den Arretierzungen 32, 33, 34, 35 eine Abdeckkappe 50 eingerastet ist. Aus Fig. 5 lässt sich besonders gut erkennen, dass die Gegenfederzunge 46 gegen die Abdeckkappe 50 vorgespannt und diese somit spielfrei befestigt ist. Weiterhin ist Fig. 5 zu entnehmen, dass der in Richtung der Randstege 42, 43 nach innen gebogene Federabschnitt 40 der Andruckfederzunge 12 deutlich abgeflacht ist, wobei die Andruckfederzunge 12 einen verhältnismäßig hohen Anpressdruck auf den Kopfabschnitt 4 ausübt, die ausreichend ist, um unter Vermeiden von Artefakten an der Grenzfläche zu der Glasplatte 47 dem Regensensor 3 das Erfüllen seiner Messeaufgabe zu ermöglichen.

## Patentansprüche

1. Vorrichtung zum Befestigen eines Regensensors (3) an einem Träger (47) mit einem Bodenteil (1), das auf einer dem Träger (47) zugewandten Seite zum Befestigen an dem Träger (47) mit einem Klebstoffauftrag (17, 18, 23, 24) versehen ist, mit zwei zu einer Bodenplatte (8) des Bodenteils (1) im wesentlichen rechtwinklig ausgerichtete Seitenstegen (6, 7) und mit einem Deckteil (2), das über mit den Seitenstegen (6, 7) des Bodenteils (1) in Eingriff bringbare Randstege (42, 43) und über eine an einem Ende angeformte Andruckfederzunge (12) verfügt, wobei die Andruckfederzunge (12) einen Federabschnitt (40) und einen sich an den Federabschnitt (40) anschließenden Anlageabschnitt (41) aufweist, der unter Vorspannung an dem Kopfabschnitt (4) eines zwischengefügten Regensensors (3) anliegt, **dadurch gekennzeichnet, dass** das Bodenteil (1) zwei einander gegenüberliegende sowie parallel zu den Seitenstegen (6, 7) ausgerichtete Halsstege (26, 27) zum Fixieren eines Halsabschnittes (5) des Regensensors (3) und zwei an den Seitenstegen (6, 7) angesetzte, winklig zu den Seitenstegen (6, 7) ausgerichtete sowie unter einem flachen Winkel nach außen angestellte Randzungen (9, 10) zum Fixieren eines rundlichen Kopfabschnittes (4) des Regensensors (3) aufweist und der Federabschnitt (40) von der Deckplatte (11) weg in Richtung der Randstege (42, 43) nach innen gebogen ist.

2. Vorrichtung nach Anspruch 1, **dadurch gekennzeichnet, dass** die Seitenstege (6, 7) und die Randstege (42, 43) über eine Anordnung von Zungenausnehmungen (36, 37) und in die Zungenausnehmungen (36, 37) eingreifende Ausstellzungen (44, 45) miteinander ein Eingriff bringbar sind.

3. Vorrichtung nach Anspruch 1 oder Anspruch 2, **dadurch gekennzeichnet, dass** die Bodenplatte (8) einen sich zwischen den Seitenstegen (6, 7) erstreckenden randseitigen Querabschnitt (19) und zwei an die Seitenstege (6, 7) angeformte, längs verlaufende Längsabschnitte (20, 21) aufweist, an denen eine Anzahl von den Klebstoffauftrag bildende Klebstoffbereiche (17, 18, 23, 24) vorhanden sind.

4. Vorrichtung nach einem der Ansprüche 1 bis 3, **dadurch gekennzeichnet, dass** der Anlageabschnitt (41) entgegen der Biegung des Federabschnittes (40) gebogenen ist.

5. Vorrichtung nach einem der Ansprüche 1 bis 4, **dadurch gekennzeichnet, dass** das Deckteil (2) Umgreifzungen (15, 16) aufweist, die die Seitenstege (6, 7) des Bodenteils (1) übergreifen.

6. Vorrichtung nach einem der Ansprüche 1 bis 5, **dadurch gekennzeichnet, dass** die Halsstege (26, 27) Ratmittel (28, 29) zum Eingriff mit dem Halsabschnitt (5) eines Regensensors (3) aufweisen.

7. Vorrichtung nach einem der Ansprüche 1 bis 6, **dadurch gekennzeichnet, dass** eine Rastanordnung (32, 33, 34, 35) zum Eingriff mit einer Abdeckkappe (50) vorhanden ist.

## Claims

1. Device for fastening a rain sensor (3) on a support (47), comprising a base part (1) which is provided, on a side facing the support (47), with an adhesive coat (17, 18, 23, 24) for fastening on the support (47), comprising two lateral webs (6, 7) oriented substantially at right angles to a base plate (8) of the base part (1), and comprising a top part (2) which has edge webs (42, 43) which can be made to engage the lateral webs (6, 7) of the base part (1) and a pressure spring tongue (12) formed at an end, the pressure spring tongue (12) having a spring section (40) and a contact section (41) which is adjacent to the spring section (40) and, under initial tension, rests against the top section (4) of an inserted rain sensor (3), **characterized in that** the base part (1) has two neck webs (26, 27) opposite one another and oriented parallel to the lateral webs (6, 7) and intended for fixing a neck section (5) of the rain sensor (3), and two edge tongues (9, 10) mounted on the lateral webs (6, 7), oriented at an angle to the lateral web (6, 7) and sloping outwards at a slight angle and intended for fixing a round top section (4) of the rain sensor (3), and the spring section (40) is curved inwards away from the top plate (11) in the direction of the edge webs (42, 43).

2. Device according to Claim 1, **characterized in that** the lateral webs (6, 7) and the edge webs (42, 43) can be made to engage one another via an arrangement of tongue recesses (36, 37) and outward-sloping tongues (44, 45) engaging the tongue recesses (36, 37).

3. Device according to Claim 1 or Claim 2, **characterized in that** the base plate (8) has a transverse section (19) which extends between the lateral webs (6, 7) and is present at the edge and two longitudinal sections (20, 21) which are formed on the lateral webs (6, 7) and on which a number of adhesive regions (17, 18, 23, 24) forming the adhesive coat are present.

4. Device according to any of Claims 1 to 3, **characterized in that** the contact section (41) is curved in a direction opposite to the curve of the spring section (40).

5. Device according to any of Claims 1 to 4, **characterized in that** the top part (2) has encompassing tongues (15, 16) which embrace the lateral webs (6, 7) of the base part (1).

6. Device according to any of Claims 1 to 5, **characterized in that** the neck webs (26, 27) have locking means (28, 29) for engaging the neck section (5) of a rain sensor (3).

7. Device according to any of Claims 1 to 6, **characterized in that** a locking arrangement (32, 33, 34, 35) is present for engaging a protective cap (50).

## Revendications

1. Dispositif de fixation d'un détecteur de pluie (3) sur un élément faisant office de support (47), comprenant un élément formant fond (1) qui, sur sa face orientée vers l'élément faisant office de support (47), est muni d'une couche de substance adhésive (17, 18, 23, 24) permettant de le fixer sur l'élément faisant office de support (47), deux segments latéraux (6, 7) orientés selon une disposition sensiblement en angle droit par rapport à la plaque (8) constituant l'élément formant fond (1) et un élément formant couvercle (2) qui comporte des segments de rive (42, 42) destinés à être engagés en prise d'encastrement avec les segments latéraux (6, 7) de l'élément formant fond (1) et une languette élastique exerçant une pression d'application (12) réalisée solidaire d'une extrémité par formage, la languette élastique exerçant une pression d'application (12) se composant en l'occurrence d'une portion élastique (40) et d'une portion d'assise (41) attenante à la portion élastique (40), qui se trouve en contact d'application, dans un état de mise en tension préalable, avec la portion de tête (4) d'un détecteur de pluie inséré entre ces éléments, **caractérisé en ce que** l'élément formant fond (1) comporte deux segments formant collet (26, 27) respectivement opposés et orientés parallèlement aux segments latéraux (6, 7) pour immobiliser en position la portion rétrécie (5) du détecteur de pluie (3) et deux languettes de rive (9, 10) disposées attenantes aux segments latéraux (6, 7), disposées en formant un angle par rapport aux segments latéraux (6, 7) et orientées vers l'extérieur selon une disposition non angulaire, pour immobiliser en position la portion de tête de forme circulaire (4) du détecteur de pluie (3).

2. Dispositif selon la revendication 1, **caractérisé en ce que** les segments latéraux (6, 7) et les segments de rive (42, 43) peuvent être engagés en prise d'encastrement réciproque par l'intermédiaire d'un agencement constitué par des ouvertures d'insertion de languettes (36, 37) et des languettes de déflexion (44, 45) venant s'insérer dans les ouvertures d'insertion de languettes (36, 37).

3. Dispositif selon la revendication 1 ou la revendication 2, **caractérisé en ce que** la plaque formant fond (8) comprend une portion transversale de rive s'étendant entre les segments latéraux (6, 7) et deux portions longitudinales (20, 21) s'étendant dans le plan longitudinal, réalisées attenantes par formage des segments latéraux (6, 7), qui comportent un certain nombre de points de collage (17, 18, 23, 24) constituant l'enduction de substance adhésive.

4. Dispositif selon l'une des revendications 1 à 3, **caractérisé en ce que** la portion d'assise (41) est repliée dans le sens contraire du cintrage de la portion élastique (40).

5. Dispositif selon l'une des revendications 1 à 4, **caractérisé en ce que** l'élément formant couvercle (2) est muni de languettes de cramponnement périphérique (15, 16), qui viennent cramponner pardessus les segments latéraux (6, 7) de l'élément formant fond (1).

6. Dispositif selon l'une des revendications 1 à 5, **caractérisé en ce que** les segments formant collet (26, 27) sont munis d'organes d'accrochage (28, 29) destinés à être engagés en prise d'encastrement avec la portion rétrécie (5) d'un détecteur de pluie (3).

7. Dispositif selon l'une des revendications 1 à 6, **caractérisé en ce qu'**il est prévu un agencement d'accrochage (32, 33, 34, 35) destiné à être amené en prise d'encastrement avec un capot de recouvrement (50).
